Europäisches Patentamt

(19) European Patent Office

Office européen des brevets

(11) Publication number : **0 313 167 B1**

(12) **EUROPEAN PATENT SPECIFICATION**

(45) Date of publication of patent specification :
02.01.92 Bulletin 92/01

(51) Int. Cl.⁵ : **B01J 29/08,** B01J 29/28,
C10G 11/05

(21) Application number : 88202333.6

(22) Date of filing : 19.10.88

(54) Catalysts for converting hydrocarbons.

(30) Priority : 23.10.87 JP 266533/87
23.10.87 JP 266534/87
26.05.88 JP 127173/88

(43) Date of publication of application :
26.04.89 Bulletin 89/17

(45) Publication of the grant of the patent :
02.01.92 Bulletin 92/01

(84) Designated Contracting States :
DE FR GB NL

(56) References cited :
EP-A- 0 162 733
EP-A- 0 236 548
GB-A- 2 138 313
US-A- 3 929 672

(73) Proprietor : NIPPON OIL CO., LTD.
3-12, 1-chome, Nishi-shimbashi Minato-ku
Tokyo (JP)
Proprietor : PETROLEUM ENERGY CENTER
FOUNDATION
3-23, 5-chome, Koji-machi
Chiyoda-ku Tokyo (JP)

(72) Inventor : Ino, Takashi
2-228 Kosugi-cho Nakahara-ku
Kawasaki-shi Kanagawa-ken (JP)
Inventor : Miyajima, Nobuyuki
203 Kizukidaimachi Nakahara-ku
Kawasaki-shi Kanagawa-ken (JP)
Inventor : Kawakatsu, Ken
203 Kizukidaimachi Nakahara-ku
Kawasaki-shi Kanagawa-ken (JP)
Inventor : Inoue, Akira
3-27 Mitsuzawa Higashi-cho Kanagawa-ku
Yokohama-shi Kanagawa-ken (JP)
Inventor : Yoshida, Hiroyuki
126 Oguchi-dori Kanagawa-ku
Yokohama-shi Kanagawa-ken (JP)

(74) Representative : Timmermans, Anthonius
C.Th., Ir. et al
European Patent Attorneys Octrooibureau
Zuid P.O. Box 2287
NL-5600 CG Eindhoven (NL)

## Description

This invention relates to a catalyst for converting hydrocarbons and more particularly to a novel hydrocarbon-converting catalyst which is remarkably effective as a fluid catalytic cracking catalyst for obtaining a light fraction oil such as gasoline and kerosene by catalytically cracking a heavy fraction oil containing at least 0.5 ppm in total of at least nickel and vanadium selected from heavy metals such as particularly nickel, vanadium, iron and copper.

In ordinary catalytic cracking, petroleum-derived hydrocarbons are contacted with a catalyst for their cracking thereby obtaining a large amount of light fraction oils such as LPG and gasoline and a small amount of cracked gas oil, and, further, coke deposited on the catalyst is burnt away with air for recycled use of said catalyst. In this catalytic cracking, there are heretofore mainly used as the feed oil so-called distillates such as a light gas oil (LGO) and heavy gas oil (HGO) from atmospheric pressure distillation towers and a vacuum gas oil (VGO) from reduced pressure distillation towers.

On the other hand, with the worldwide inevitable use of heavier crude oils as the recent natural resources for petroleum-derived goods, the heavy fraction oils such as heavy oil consequently tend to be excessive while the light fraction oils obtained by the distillation of such heavier crude oils tend to be insufficient for their demand, in due of a change in the state of an increased demand for light fraction oils. In order to meet this demand, it is necessary to convert a considerable amount of heavy fraction oils including the bottoms to light fraction oils.

It has been known, however, that heavy fraction oils including the bottoms contain metals, such as nickel, vanadium, iron, copper and sodium, in far more amounts than said distillates and that these metals will deposit on a catalyst during catalytic cracking thereby to remarkably impair the performances, such as activities and selectivity, of the catalyst. More particularly, as the metals deposit in more amounts on the catalyst, the cracking rate thereof will increasingly lower whereby a substantially desirable cracking rate cannot be obtained while the amount of hydrogen evolved and the amount of coke produced remarkably increase thereby to render the operation of the cracking apparatus difficult and lessen the yield of the required liquid products.

GB-A-2138313 considered to be most pertinent prior art discloses a catalyst for conventing hydrocarbons comprising crystalline aluminosilicat zeolite, aluminamagnesia and amorphorus silica.

An object of this invention is to provide catalysts suitable for use in converting hydrocarbons. More particularly, the object of this invention is to provide highly metal-resistant catalysts for catalytic cracking which are capable of decreasing the amounts of hydrogen and coke produced without decreasing the yields of gasoline and intermediate fractions when used in the cracking of heavy fraction oils containing at least 0.5 ppm of heavy metals such as particularly nickel, vanadium and iron.

The present inventors have previously found that a catalyst comprising crystalline aluminosilicate zeolite and alumina · magnesia matrix may be used as a highly metal-resistant one for catalytic cracking (Japanese Pat. Appln. Laid-Open Gazette No. 59-150539). The catalyst so laid open is made by a method which comprises mixing alumina · magnesia hydrogel with zeolite and then drying and calcining resulting mixture. The present inventors have also found that a highly attrition-resistant catalyst may be obtained by 10-40% of the above alumina is replaced with a pseudoboehmite-derived alumina (Japanese Pat. Appln. 62-201802, now laid open as Pat. Appln. Laid-Open Gazette No. 64-47449). The catalyst so obtained has high metal resistance and attrition resistance and is one suitable for the catalytic cracking of the bottoms. However, a catalyst containing alumina-magnesia as the matrix is somewhat inferior in the bottoms cracking performances to a catalyst containing silica · alumina as the matrix.

This invention has been made by mating intensive studies and researches to overcome the above drawbacks.

The object of this invention may be achieved by providing either a hydrocarbon converting catalyst comprising 10-40 wt.% of crystalline aluminosilicate Y-type zeolite having a lattice constant of 24.25-24.55 Å (angstrom), 10-80 wt.% of alumina · magnesia and 5-50 wt.% of amorphous silica, the magnesia content of said alumina · magnesia being 10-60 wt.%. thereof, or a hydrocarbon converting catalyst comprising 10-40 wt.% of crystalline aluminosilicate Y-type zeolite having a lattice constant of 24.25-24.55 Å (angstrom), 10-80 wt.% of alumina magnesia, 5-50 wt.% of amorphous silica and 5-50wt.% of clay, the magnesia content of said alumina · magnesia being 10-60 wt.% thereof.

The alumina ($Al_2O_3$) used in this invention is one which is made by an ordinary method which comprises, for example, pyrolyzing alumina hydrate. The alumina hydrate includes pseudoboehmite, amorphous alumina hydrate, bayerite, gibbsite and norbstrandite. These alumina hydrates may be prepared from an alkali aluminate such as sodium aluminate or potassium aluminate as well as from an aluminum salt such as aluminum sulfate, aluminum chloride or aluminum nitrate, by the use of an ordinary method. The alumina hydrates may also be prepared from both the alkali aluminates and the aluminum salts. According to this invention, the use of pseudoboehmite in substitution for 10-40 wt.% of said alumina will result in producing a catalyst having particularly high attrition resistance.

The boehmite (boehmite gel) is fibrous alumina hydrate may be prepared using an ordinary method from an alkali aluminate and an aluminum salt as the starting materials. For example, an aqueous solution of an aluminum salt is reacted with an aqueous solution of an alkali aluminate at a pH of 5-11 to obtain the pseudoboehmite. As required, the pseudoboehmite so obtained may be aged at a pH of 9-11 and 20-100°C for 5 minutes to 20 hours.

The magnesia (MgO) used in this invention may be prepared using an ordinary method from a magnesium salt such as magnesium nitrate, magnesium chloride or magnesium sulfate.

In this invention, it is suitable that the magnesia content in the alumina · magnesia be 10-60 wt.%, preferably 10-40 wt.%, more preferably 15-40 wt.%. The magnesia content of less than 10 wt.% in the matrix will not result in the production of a catalyst having high metal resistance, while that of more than 60 wt.% will not result in producing a catalyst having enough attrition resistance.

The amorphous silica ($SiO_2$) used in this invention may include silica sol or silica gel obtained by neutralizing water glass with a mineral acid such as sulfuric acid, chloric acid or nitric acid. There may also be used stabilized silica sol obtained by removing from water glass the greater part of the sodium contained therein. There may further be used the remaining silica obtained by treating a clay mineral such as kaolin with an acid to elute from the clay the aluminum contained therein.

The clay used in this invention is one usually employed in catalytic cracking catalysts and is illustrated by kaoline, bentonite, montmorillonite or halloysite.

The crystalline aluminosilicate zeolite dispersed in the matrix when used, is Y-type zeolite having a lattice constant of 24.25-24.55 Å (angstrom).

Zeolites having such a lattice constant may be obtained by ion-exchanging sodium-Y type zeolite (Na-Y, lattice constant 24.64-24.70 Å) or Na Y with ammonium ion to obtain $NH_4$-Y and then dealuminizing the thus obtained $NH_4$-Y. It is well known that the dealuminization may be carried out by treating Na-Y or $NH_4$-Y with a reagent such as ethylenediaminetetraacetic acid (EDTA), silicon tetrachloride or ammonium silicofluoride or by heat treating $NH_4$-Y with steam, the latter being generally used. In order to obtain zeolite having high hydrothermal stability, it is necessary that the sodium contained in dealuminized zeolite be further ion-exchanged with ammonium ion to the extent that the sodium content in the thus ion-exchanged zeolite is 0.5 wt.% or less as $Na_2O$. The thus ion-exchanged dealuminized zeolite having a lower content of sodium (this zeolite being Y type zeolite) is called an ultradtable zeolite (USY) having high hydrothermal stability.

Zeolites may be varied in lattice constant as desired by varying the conditions of dealuminization, but zeolites used in this invention have a lattice constant of 24.25-24.55 Å.

Further, the Na ion or proton in zeolites is ion-exchangeable with other cations, and it is possible to increase zeolites in hydrothermal stability by ion-exchanging with a monovalent lithium or polyvalent cation. Such cations include $Li^+$, $Ca^{2+}$, $Mg^{2+}$, $Fe^{2+}$, $Fe^{+3}$, $Mn^{2+}$ and rare earth element ions such as Ce, Sc, Y, La and Ac ions.

A method for preparing the zeolites is not particularly limited. For example, the zeolites may be prepared by a method which comprises adding Na-Y type zeolite to an aqueous solution of ammonium chloride and then agitating the resulting mixture at 60-100°C for 2-10 hours for ion exchange. The ion exchange operation is repeated 2-5 times as required. Then, the zeolite which has been filtered and washed, is dried at 30-150°C for a full day. The thus dried zeolite contains $Na_2O$ in an amount of 0.5-2.0 wt.% thereof. This zeolite is then treated at 500-750°C for 1-10 hours in a steam atmosphere whereby the aluminum in the lattice partly falls off and the lattice constant decreases. Finally, said zeolite may be again subjected to ion exchange with ammonium chloride to decrease the $Na_2O$ content to 0.5 wt.% or less.

The content of the alumlna · magnesia consisting alumina and magnesia, according to this invention, is 10-80 wt.%, preferably 30-80 wt.% and more preferably 30-65 wt.% of the catalyst. The content of the amorphous silica used in this invention is 5-50 wt.%, preferably 5-40 wt.% and more preferably 10-30 wt.%. The zeolite content of less than 10 wt.% will result in producing a catalyst having undesirably low catalytic activity, while that of more than 40 wt.% will result in producing a catalyst having too high activity thereby causing overdecomposition with a decreased yield of desired products.

The amorphous silica content of less than 5 wt.% will result in producing a catalyst wherein the matrix decreases in acidity thereby lowering the capability of cracking residual oils, while that of more than 50 wt.% will result in producing a catalyst having decreased attrition resistance and metal resistance.

The content of clay used for the catalyst of this invention is 5-50 wt.%, preferably 5-40 wt.% and more preferably 10-30 wt.% of the catalyst. The clay not only serves as a filler, but also is effective in making comparatively large pores having a pore size of 500-10000 Å in the matrix thereby enhancing catalytic capability of cracking residual oils. To attain the effect of such clay, the clay content of at least 5 wt.% will be required. The clay content of more than 50 wt.% will result in producing a catalyst having decreased attrition resistance and metal resistance.

The higher the alumina · magnesia content is, the greater the metal resistance is. Thus, the alumina · magnesia content of at least 10 wt.% is required. However, the aluminum · magnesia content must not exceed 80 wt.% since other necessary components, such as zeolite and amorphous silica, must be contained.

A method for the preparation of the catalyst of this invention will be illustrated hereunder. Firstly, an aqueous solution containing an aluminum salt and a magnesium salt is reacted with an aqueous solution of a basic compound at a pH of at least 8.5 to obtain an alumina · magnesia hydrogel slurry. The above basic compound includes ammonia ($NH_3$), sodium hydroxide (NaOH) and potassium hydroxide (KOH). The reaction between the aqueous solution containing the aluminum and magnesium salts, with the aqueous solution of the basic compound may be carried out without particular limitations only if it is carried out at a pH of at least 8.5, preferably 9.0-11.0. It is preferable, however, to add dropwise the aqueous solution containing the aluminum and magnesium salts to the aqueous solution of the basic compound. If such alumina · magnesia hydrogel is attempted to be formed at a pH of lower than 8.5, magnesia will not fully precipitate, this being undesirable.

Then, an aqueous solution of an aluminum salt is reacted with an aqueous solution of an alkali aluminate at a pH of 5-11 to obtain pseudoboehmite which is then mixed with said alumina · magnesia hydrogel slurry.

Separately, water glass is neutralized with a mineral acid such as sulfuric acid to prepare silica sol. At this time the pH value is 1.0-3.5, and the thus prepared silica sol is aged at 10-70°C for about 5-100 minutes to adjust the silica sol in particle size.

Thereafter, said zeolite, silica sol and clay are dispersed in the mixture of said pseudoboehmite and alumina · magnesia hydrogel slurry, after which the whole is spray-dried with hot air at 200-350°C and then calcined at 400-700°C, preferably 500-600°C to obtain a catalyst of this invention. By this calcination, the alumina · magnesia hydrogel is converted to alumina · magnesia spinel and the silica sol is converted to amorphous silica, a part of this silica interacting with the alumina · magnesia to exhibit solid acidity. On the other hand, the thus spray-dried catalyst may also be used as it is without calcinative, and, in this case, the catalyst is charged in the regenerator of a FCC (Fluid Catalytic Cracking) unit wherein it is calcined.

It is preferable that the catalyst of this invention have a surface area of 50-400 $m^2$/g, a pore volume of 0.1-1.2 $cm^3$/g and an average particle size of 40-80 μm.

When the catalyst of this invention is used in the cracking of heavy fraction oils, the heavy metals such as nickel and vanadium will be immobilized and inactivated on the catalyst whereby not only an increase in yields of hydrogen and coke as well as a decrease in catalytic activity due to the metals deposited on the catalyst are inhibited thereby to reduce the loads which would otherwise be applied to the gas compressor, one of units of an apparatus for the distillation of cracked products and to an air blower supplying air for burning the coke deposited on the catalyst, but also the selectivity and yield of the required liquid products increase. In addition, since the catalyst of this invention is excellent in attrition resistance, it may be kept in a stable fluid condition in a reaction apparatus used and the catalyst loss from FCC unit is small when used.

The reason for the immobilization and inactivation of the heavy metals deposited on the catalyst of this invention is not clear, but it is considered that the nickel deposited on the catalyst of this invention in the reactor is oxidized to form nickel oxide in the regenerator, the ion radius of the nickel at this time is approximately equal to that of the magnesium and, therefore, the thus formed nickel oxide easily forms a solid solution with alumina · magnesia spinel. The nickel oxide so in the solid solution is stable and will not be again reduced in the reactor whereby the dehydrogenating activity of nickel is lost and the formation of hydrogen and coke is inhibited. Likewise, vanadium is oxidized to form vanadium pentoxide in the regenerator. It is told that since the vanadium pentoxide has a comparatively low melting point of 674°C, it moves on the catalyst and reacts with the zeolite whereby it destroys the crystal structure of zeolite and lowers the catalytic activity of the catalyst. However, the vanadium pentoxide deposited on the alumina · magnesia spinel is reacted with alumina or magnesia to form a stable composite oxide (for example, 3 MgO · $V_2O_5$) having a high melting point which is immobilized.

The resulting catalyst may be enhanced in attrition resistance when 10-40 wt.% of alumina to be used in the catalyst is aluminium via pseudoboehmite. This is because the crystal of pseudoboehmite is finely fibrous and these fibers are entangled together thereby to form secure catalyst particles when a pseudoboehmite-containing gel is dried and calcined.

Further, alumina · magnesia is mixed with amorphous silica to allow a part of the amorphous silica to interact with the alumina · magnesia to form a matrix which exhibits solid acidity acidic property. Because of this, the cracking of large hydrocarbon molecules (contained in residual oils) by the matrix is promoted thereby to enhance the catalyst in capability of cracking residual oils.

This invention will be better understood by the following Examples and Comparative Example.

Example 1

(A) Preparation of pseudoboehmite and alumina · magnesia hydrogel

Six (6) grams of sodium aluminate and 0.2 c.c. of gluconic acid are dissolved in 60 c.c. of pure water and heated to 50°C. Separately, 6.4 g of aluminum sulfate are dissolved in 60 c.c. of pure water and heated to 50°C. The thus obtained solution of aluminum sulfate is added with vigorous agitation to said solution of sodium aluminate to form an alumina hydrogel at a pH of 9.5. This hydrogel is aged at 50°C for one hour to obtain pseudoboehmite. Then, 300 c.c. of a mixed solution of 77 g of aluminum chloride and 20 g of magnesium chloride are added dropwise to ammonia water thereby to form an alumina · magnesia hydrogel at a pH of 9.5.

Thereafter, the thus formed alumina · magnesia hydrogel is mixed with a hydrogel of said boehmite and then aged at 85°C for 4 hours, after which the gel so aged is filtered off and then washed with an enough amount of water to obtain a hydrogel.

(B) Preparation of silica sol

Thirty-two (32) grams of a diluted solution of water glass JIS No. 3 (SiO$_2$, conc. 11.6%) are added dropwise to 5 g of 40% sulfuric acid to obtain silica sol of pH 2.4 which is further aged at room temperature for 40 minutes.

(C) Preparation of USY type zeolite

Into a 5-liter beaker are charged 100 g of Na-Y type zeolite and 250 g of ammonium chloride, after which pure water is added to the thus charged beaker to the extent that the contents of said beaker reach 5 liters in volume. The contents are heated to 80°C while stirring with a magnetic stirrer for 3 hours, thereafter filtered and then washed with 5 liters of pure water to obtain a zeolite material. After repeating the above procedure twice, the zeolite material is dried in an oven at 110°C for one full day and steam treated at 750°C for 3 hours. Finally, the zeolite so treated is subjected to ion-exchange operation once again, washed and dried to obtain a zeolite. The thus obtained zeolite is measured for its lattice constant by X-rays diffraction in accordance with ASTM D-3942-80. The lattice constant thus found is 24.50 Å, and the amount of the remaining Na$_2$O is 0.21 wt.%.

Then, the whole amount of the hydrogel prepared at (A), the whole amount of the silica sol prepared at (B), 7.5 g of the zeolite prepared at (C) and 1.9 g of kaolin are kneaded together, spray dried and then calcined at 600°C in air for 2 hours thereby to obtain a catalyst A. The properties and the like of the catalyst A are as shown in the following Table 1.

This catalyst is tested for its attrition resistance as explained hereunder.

A predetermined amount of the catalyst is fluidized at a fixed air velocity for 30 hours. During the fuidization, a part of the catalyst is finely pulverized and scattered to the outside of the system.

The weight percent of the pulverized portion of the catalyst in the original catalyst is expressed as a attrition resistance index.

Then, the catalyst A is evaluated for its activity and selectivity by ASTM (D-3907) MAT (Micro Activity Test).

Further, in order to study the metal resistance of the catalyst of this invention, 0.3 wt.% of nickel and 0.6 wt.% of vanadium are carried on the catalyst in accordance with the Mitchell's method (Ind. Eng. Chem. Prod. Res. Dev., 19, 209 (1980)). More particularly, the catalyst is impregnated with a solution of nickel naphthenate and vanadium naphthenate in toluene, freed from the solvent by evaporation and then calcined at 550°C in air for 3 hours. The thus obtained catalyst is subjected to steaming at 770°C for 6 hours before it is subjected to the MAT. The reaction conditions in the MAT is : WHSV 16 hr$^{-1}$ ; catalyst/oil ratio, 3 ; reaction temperature, 482°C ; starting oil, desulfurized residual oil containing 4 wt.% of residual carbon. The results of the MAT are as indicated in Table 1. The conversion and LCO (light cycle oil) ratio are respectively as defined hereunder.

Conversion =  [(amt. of starting oil — amt. of fraction bolling at 216°C or higher) / amt. of starting oil] × 100 (wt.%)

LCO ratio =  [(amt. of fraction boiling at 216-350°C) / (amt. of fraction boiling at 216°C or higher)] × 100 (wt.%)

The conversion indicates the activity of a catalyst and the LCO ratio indicates the residual oil cracking capability thereof.

Example 2

The whole amount of an alumina · magnesia hydrogel prepared by the same method as used in the preparation of the hydrogel (A) of Example 1, 14 g of silica sol as $SiO_2$, the silica sol being prepared by the same method as used in the preparation of the silica sol (B) of Example 1, 14 g of the zeolite (C) prepared at (C) of Example 1 and 17.5 g of kaolin are kneaded together and then treated in the same manner as in Example 1 thereby to obtain a catalyst B of this invention.

The composition of the catalyst B, and the attrition resistance and catalytic performance thereof obtained by evaluating in the same manner as in Example 1, are indicated in Table 1.

Comparative Example 1

The whole amount of an alumina · magnesia hydrogel prepared by the same method as used in Example 1 (A), 12.2 g of the zeolite prepared in Example 1 (C) and 12.2 g of kaolin are kneaded together and then treated in the same manner as in Example 1 thereby to obtain a catalyst C.

The composition and other properties obtained by the same evaluation test as used in Example 1, are indicated in Table 1.

Example 3

300 c.c. of a mixed aqueous solution of 47.5 g of aluminum chloride and 40 g of magnesium chloride are added dropwise into ammonia water to produce an alumina · magnesia hydrogel at a pH of 9.5. The thus produced hydrogel is then aged at 85°C for 4 hours, filtered off and washed with an enough amount of pure water.

Thereafter, the whole amount of the hydrogel so washed is kneaded with 89.8 g of commercially available stabilized silica sol ($SiO_2$, conc. 20%, produced under the tradename of SI-550 by Shokubai Kasei Kogyo Co., Ltd.), 14.4 g of zeolite prepared in Example 1 (C) and 21.6 g of kaolin, spray dried and calcined at 600°C in air for two hours to obtain a catalyst D of this invention.

The composition of the catalyst D, and the attrition resistance index and catalytic performances obtained by evaluation in the same manner as in Example 1, are indicated in Table 1.

6

Table 1

| | | | Example 1 | Example 2 | Comparative Example 1 | Example 3 |
|---|---|---|---|---|---|---|
| | Catalyst | | A | B | C | D |
| | Alumina·magnesia | wt.% | 65 | 35 | 50 | 25 |
| Composition of catalyst | Al₂O₃ | wt.% | 83.5 | 83.5 | 83.5 | 55.9 |
| | Comp.of the above alumina· magnesia | | (20) | (20) | (20) | (0) |
| | MgO | wt.% | 16.5 | 16.5 | 16.5 | 44.1 |
| | Kaolin | | 5 | 25 | 25 | 30 |
| | Amorphous silica | wt.% | 10 | 20 | 0 | 25 |
| | Zeolite | wt.% | 20 | 20 | 25 | 20 |
| Results of MAT | Conversion | wt.% | 61.5 | 60.2 | 61.1 | 63.1 |
| | Gasoline yield | wt.% | 43.3 | 42.0 | 43.0 | 45.9 |
| | LCO ratio | wt.% | 68.2 | 71.5 | 59.2 | 77.2 |
| | Coke yield | wt.% | 9.7 | 10.2 | 9.9 | 7.6 |
| | Dry gas yield | scf/bbb | 242 | 237 | 212 | 202 |
| | Hydrogen/methane | mol/mol | 9.0 | 8.8 | 8.7 | 7.9 |
| | Attrition index | wt.% | 7 | 6 | 9 | 12 |

The numerals in parentheses indicate the ratio (wt.%) of the alumina portion obtained via pseudoboehmite to the whole alumina.

It is seen from Table 1 that when used, the catalysts A, B and D each containing the amorphous silica exhibit a high LCO ratio as compared with the catalyst C and, therefore, the former three have high capability of cracking residual oils as compared with the latter. It is further seen that the catalysts A, B and D may contain the zeolite in a smaller amount than the catalyst C when approximately the same conversion is obtained with each of said four catalysts because the matrix of each of the former three has high cracking activity.

## Claims

1. A catalyst for converting hydrocarbons, comprising 10-40 wt.% of crystalline aluminosilicate zeolite, 10-80 wt.% of alumina · magnesia and 5-50 wt.% of amorphous silica, the magnesia content of said alumina · magnesia being 10-60 wt.% thereof and said zeolite is a Y type zeolite having a lattice constant of 24.25-24.55 Å.

2. A catalyst for converting hydrocarbons, comprising 10-40 wt.% of crystalline aluminosilicate zeolite, 10-80 wt.% of alumina · magnesia, 5-50 wt.% of amorphous silica and 5-50 wt.% of a clay, the magnesia content of said alumina · magnesia being 10-60 wt.% thereof and said zeolite is a Y type zeolite having a lattice constant of 24.25-24.55 Å.

3. A catalyst according to claim 1 or 2, wherein 10-40 wt.% of said alumina is alumina prepared via pseudoboehmite.

**Patentansprüche**

1. Katalysator für die Umwandlung von Kohlenwasserstoffen, wobei der Katalysator aus 10-40 Gew.% kristallinem Aluminosilikatzeolit, 10-80 Gew.% Aluminiumoxid · Magnesiumoxid und 5-50 Gew.% amorphem Siliciumdioxid besteht, wobei der Gehalt des Magnesiumoxids in dem Aluminiumoxid · Magnesiumoxid 10-60 Gew.% beträgt und der Zeolit vom Y-Typus ist, mit einer Gitterkonstante von 24,25-24,55 Å.

2. Katalysator für die Umwandlung von Kohlenwasserstoffen, wobei der Katalysator aus 10-40 Gew.% kristallinem Aluminosilikatzeolit, 10-80 Gew.% Aluminiumoxid · Magnesiumoxid und 5-50 Gew.% amorphem Siliciumdioxid, und 5-50 Gew.% Tonerde besteht, wobei der Gehalt des Magnesiumoxids in dem Aluminiumoxid · Magnesiumoxid 10-60 Gew.% beträgt und der Zeolit vom Y-Typus ist, mit einer Gitterkonstante von 24,25-24,55 Å.

3. Katalysator nach Anspruch 1 oder 2, dadurch gekennzeichnet, daß 10-40 Gew.% des Aluminiumoxids mit Pseudo-Boehmiet aufbereitet worden sind.

**Revendications**

1. Catalyseur pour la conversion d'hydrocarbures, comprenant 10 à 40% en poids de zéolite de silicate alumineux cristallin, 10 à 80% en poids de magnésie alumineuse et 5 à 50% en poids de silice amorphe, la teneur en magnésie de ladite magnésie alumineuse étant de 10 à 60% en poids de celle-ci, et ladite zéolite est une zéolite de type Y présentant une constante de réseau de 24,25 à 24,55 angström.

2. Catalyseur pour la conversion d'hydrocarbures, comprenant 10 à 40% en poids de zéolite de silicate alumineux cristallin, 10 à 80% en poids de magnésie alumineuse, 5 à 50% en poids de silice amorphe et 5 à 50% en poids d'argile, la teneur en magnésie de ladite magnésie alumineuse étant de 10 à 60% en poids de celle-ci, et ladite zéolite est une zéolite de type Y présentant une constante de réseau de 24,25 à 24,55 angström.

atalyseur selon la revendication 1 ou 2, dans lequel 10 à 40% en poids de ladite alumine est de l'alumine préparée via de la pseudo-boehmite.